# EUROPEAN PATENT APPLICATION

(11) **EP 2 738 393 A1**
(43) Date of publication of application: **04.06.2014**
(21) Application number: 12194976.2
(22) Date of filing: 30.11.2012
(51) Int. Cl.: F04D 29/056, F04D 19/04, F16C 19/00

(54) **Support for rolling bearings**

(71) Applicant: Agilent Technologies, Inc., Santa Clara CA 95051 (US)
(72) Inventor: Quartarone, Carmelo, 10064 Leini' (TO) (IT); Campagna, Luca, 10064 Leini' (TO) (IT); Follo, Alessandro, 10064 Leini' (TO) (IT)
(74) Representative: Robba, Pierpaolo

(57) **Abstract**

Support for rolling bearings (1) comprising a first inner annular shell (3) made of metal and intended to be mounted on the outer surface of a rolling bearing, a second outer annular shell (5) made of metal, concentric with said first inner annular shell and external thereto and intended to be mounted on the surface of the bearing seat, and an intermediate elastomeric member (7) provided between said inner and outer shells and fixed thereto. Thanks to the configuration of the invention, any relative movement between the metal shells (3, 5) and the intermediate elastomeric member (7) is prevented, while allowing movement of the first inner shell (3) and the second outer shell (5) relative to each other, so that the radial and axial stiffness of the support only depends on the mechanical properties and geometry of the intermediate elastomeric member (7).

## Description

### Technical field

The present invention relates to a support for rolling bearings.

More particularly the present invention relates to an annular support rolling bearings, which can advantageously find application in a rotary vacuum pump, such as a turbomolecular vacuum pump.

### Prior art

As known, rolling bearings are mechanical devices in which a relative motion between a rotating member, e.g. a shaft, and a stationary member, e.g. a housing, takes places with the interposition of balls or rollers rolling between two tracks, one of which is directly formed on the rotating member or on a ring integral therewith, and the other one is formed on the stationary member or on a second ring integral therewith. The balls or rollers are generally spaced by a variously shaped cage, capable of separating and holding the balls or rollers. In some applications, the aforesaid relative motion can also take place between a pair of members rotating at different speeds.

In some industrial applications, a resilient support is to be interposed between the bearings and the seat receiving them and / or between the bearings and the rotating member. Said resilient support is arranged to provide support in the radial direction and to prevent vibrations from propagating from the shaft to the housing in which the shaft is mounted. One of the applications where use of a resilient support is generally provided for concerns rotary vacuum pumps, more particularly turbomolecular vacuum pumps of the kind equipped with mechanical bearings.

As known, rotary vacuum pumps are equipped with rotating shafts supported either by magnetic bearings or by mechanical rolling bearings, in which the shaft rotates at extremely high speed, typically in the range 20,000 to 90,000 rpm.

When the pump is equipped with mechanical bearings, in order to prevent vibrations of the shaft or of the pumping rotor associated therewith from propagating to the pump structure, annular supports of elastomeric material (so-called "square-rings") are provided, which surround the rolling bearings.

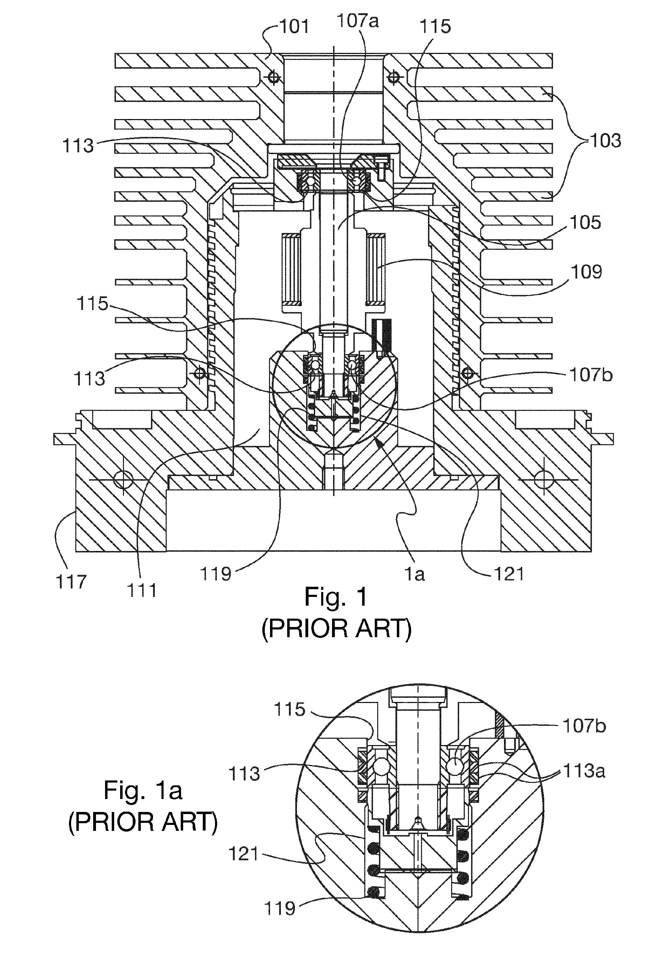

Fig. 1 shows an example of turbomolecular pump 100 in which a rotor 101 is equipped with rotor discs 103 that, by co-operating with stationary stator discs integral with the pump housing (not shown), provide for gas pumping between the inlet port and the discharge port of the pump.

Said rotor 101 is mounted on a rotating shaft 105 supported by ball bearings 107a, 107b, said rotating shaft 105 being rotated by an electric motor 109 housed within a cavity 111 formed in a pump basement 117.

As clearly shown in Fig. 1a, a resilient annular support 113, consisting of one or more rings 113a made of an elastomeric material, is provided between each ball bearing 107a, 107b and the corresponding seat 115 formed in the pump basement 117.

The provision of annular supports 113 is due above all to the need of damping vibrations transmitted by the rotating portions of the pump to the body of the pump itself and, through the pump, to the vacuum chamber.

More particularly, in some especially critical applications (such as in scanning electron microscope applications), where the vacuum pump is used in association with very sophisticated measurement instruments, it is imperative to prevent the vibrations of the pump rotor from being transmitted to the remaining structure and in particular to the instruments.

A direct consequence of the damping of said vibrations is the reduction of the overall pump noise.

The elastomeric rings 113a of the annular support 113 are radially pressed between two metallic surfaces, i.e. the outer surface of the ball bearing and the surface of the corresponding seat, thus generating a friction force at the interface surfaces in the radial direction.

On the other hand, relative movements both in the axial and circumferential directions between the ball bearing and the rings of the resilient annular support 113 are allowed.

In this respect, ball bearings mounted in vacuum pumps are generally submitted to an axial preload. For instance, in the case shown in Figs. 1 and 1a, a spring 119 housed in a spring cup 121 designed for guiding its deformation is provided for exerting an axial force in order to provide the proper preload for the roller bearing and the proper axial positioning of the rotor.

In some specific pumps, a further annular elastomeric element acting as an axial spring could be provided for damping axial vibrations.

Using elastomeric rings as bearing supports entails a number of drawbacks, mainly related to the friction force acting between the bearing and the elastomeric rings.

First, in these rings it is very difficult to attain uniform mechanical characteristics and, instead, different ring points exhibit different characteristics. For the same reason, it is practically impossible to manufacture several rings of elastomeric material all exhibiting the same mechanical properties, and therefore it is impossible as well to precisely foresee their behavior, already at the design phase.

Second, the properties of the elastomeric material strongly depend on the applied loads (i.e. on the friction force) and they vary over time and operating temperature in an unpredictable way. More particularly, such variations can result in a loss of resiliency, which has, *inter alia,* severe consequences on the balancing of the rotor, on the transmission of vibrations to the pump body and on the pump noise.

Moreover, the considerable axial friction existing between the ball bearings and the elastomeric rings may considerably hinder the proper application of the preload by the axial spring, so that the value of said preload is not stable and, consequently, the axial position of the rotor becomes not well defined.

In order to overcome the drawbacks of elastomeric material, fully metallic annular supports for rolling bearings have been proposed.

Documents US 4 872 767 and WO 2006/131694, for instance, disclose bearing supports including a cylindrical outer shell, a cylindrical inner shell concentric therewith so as to define an annular gap, and a plurality of flexional springs connecting said inner and outer shells.

However, also such solutions are not free from drawbacks.

For instance, in order to obtain a support resilient enough for properly damping radial vibrations such metallic bearing supports - and more particularly their flexional springs - have a very complex shape, which involves high manufacturing costs.

It is therefore the main object of the present invention to overcome the above drawbacks by providing a support for rolling bearings which is capable of effectively restraining the vibrations transmitted by the bearing or rotating shaft associated to the support itself, and which allows to obtain a predictable behavior in terms of radial stiffness and axial preload. Another object of the present invention is to provide a bearing support that is easy and inexpensive to manufacture.

A further object of the present invention is to provide a rotary vacuum pump, namely a turbomolecular pump, comprising a rotor mounted on a rotating shaft supported by rolling bearings wherein both the damping of vibrations and the precise radial and axial positioning of the rotor shaft can be easily and effectively attained.

The above and other objects are achieved by the support for rolling bearings and by the rotary vacuum pump as claimed in the appended claims.

### Summary of the invention

According to the present invention, a support for rolling bearings comprises:
- a first inner annular shell made of metal and intended to be mounted on the outer surface of a rolling bearing;
- a second, outer annular shell made of metal, concentric with said first inner annular shell and external thereto and intended to be mounted on the surface of the bearing seat;
- an intermediate elastomeric member provided between said inner and outer shells and fixed thereto.

Therefore, the first inner shell and the second outer shell are separate and distinct elements, connected to each other only through the intermediate elastomeric member. Thanks to the configuration of the invention, a metal - metal contact surface is obtained both between the rolling bearing and its support and between said support and the bearing seat.

Always thank to this configuration, any relative movement between the metal shells and the intermediate elastomeric member is prevented, while allowing movement of the first inner shell and the second outer shell relative to each other.

As a consequence, the radial and axial stiffness of the support according to the invention only depends on the mechanical properties of the intermediate elastomeric member, namely on its Young modulus or tensile modulus, and on the geometry thereof, and it is not affected by the friction force acting between the rolling bearing and the support itself. Therefore, the bearing support can be properly designed in order to obtain the desired performances in terms of radial stiffness, whereby the vibrations from the rolling bearing and the rotating member associated thereto can be effectively damped.

Preferably, the inner diameter of the first inner shell is designed so as to allow said shell to be mounted with interference on the outer surface of the rolling bearing, thus avoiding any sliding movement between the first inner shell and the bearing.

Analogously, the second outer shell is designed so as to avoid any sliding movement relative to the bearing seat; to this aim, said second outer shell can be provided with through-holes for the passage of screws so as to be screwed to the bearing seat. Preferably the intermediate elastomeric member is molded between the first inner shell and the second outer shell.

According to a preferred embodiment of the invention, the inner and outer shells both have a substantially cylindrical shape.

According to another preferred embodiment of the invention, the second outer shell has a substantially cylindrical shape, while the first inner shell is provided on the inner side with an inwardly protruding annular rim, partially overlapping the outer ring of the rolling bearing, so as to ensure an axial contact with the rolling bearing itself.

According to the present invention, a rotary vacuum pump comprises:
- a pump housing having a pump inlet port and a pump outlet port and comprising a pump basement;
- a stator integral with said pump housing and provided with one or more stator discs;
- a rotating shaft mounted inside said pump housing;
- a rotor mounted on said rotating shaft and provided with one or more rotor discs, said rotor discs cooperating with said stator discs for pumping a gas from the pump inlet to the pump outlet;
- one or more rolling bearings supporting the rotating shaft;
- a bearing support associated to each rolling bearing and comprising a first inner annular shell made of metal and intended to be mounted on the outer surface of a rolling bearing, a second outer annular shell made of metal, concentric with said first inner annular shell and external thereto and intended to be mounted on the pump housing and an intermediate elastomeric member provided between said inner and outer shells and fixed thereto.

Preferably, the rotary vacuum pump comprises two rolling bearings for supporting the rotating shaft, namely a lower rolling bearing and un upper rolling bearing.

Thanks to the configuration of the invention, the radial and axial stiffness of the bearing supports is more predictable and can be properly chosen in order to effectively damp the vibrations coming from the rotating shaft of the rotor and reduce the pump noise. Advantageously, by applying a proper offset between the inner shell and the outer shell of the bearing support, such support can also act as a spring in the axial direction, thus providing a desired preload for the bearing and ensuring the correct axial positioning of the rotating shaft and of the rotor carried by the shaft.

In this way the presence of an external spring for preloading the bearings and adjusting the rotor axial position can be avoided.

According to a preferred embodiment of the present invention, the pump housing is designed so that a gap in the axial direction is always provided between the bearings and their supports and the pump housing itself, whereby the rolling bearings can move in the axial direction and any force is transmitted from the rotating shaft to the pump housing through the bearing supports only.

According to this configuration the bearing preload and the rotating shaft axial positioning depend on the mechanical properties of the bearing supports, namely on their stiffness.

This configuration allows for the most effective damping of vibrations.

According to an alternative embodiment of the present invention, the pump housing is designed so that at least one of the bearings and/or the corresponding support is in direct contact in the axial direction with the pump housing itself, whereby forces are transmitted from the rotating shaft to the pump housing through the bearing supports as well as through such contact surface.

According to this configuration the rotating shaft axial positioning does not depend on the mechanical properties of the bearing supports, while the bearing preload only depends on the mechanical properties of the support of the rolling bearing that is not in direct contact with the pump housing.

This configuration allows for the most accurate control of the axial position of the rotating shaft and of the rotor associated thereto.

According to a further alternative embodiment of the present invention, the pump housing is designed so that a gap in the axial direction is always provided between the bearings and their supports and the pump housing itself and at least one of the bearings and/or the corresponding support is in contact in the axial direction with the pump housing via an annular elastomeric element fitted in the gap, whereby said annular elastomeric element acts as an axial spring.

This configuration effectively combines a satisfactory damping of vibrations and a reliable control of the axial position of the rotating shaft and of the rotor associated thereto.

### Brief description of the drawings

Further characteristics and advantages of the support for rolling bearings according to the invention will be evident from the detailed description of some preferred embodiments, given by way of non-limiting example with reference to the accompanying drawings, wherein:
Fig. 1 schematically shows in a cross-sectional view an example of a known turbomolecular pump, including supports for rolling bearings according to prior art;
Fig. 1a is an enlarged view of detail 1a of Figure 1;
Fig. 2 is a cross-sectional view of a support for rolling bearings according to a preferred embodiment of the invention;
Fig. 3 is a cross-sectional view of a support for rolling bearings according to another preferred embodiment of the invention;
Fig. 4 schematically shows a rotary vacuum pump having a rotating shaft mounted therein and supported by rolling bearings and associated bearing supports according to a preferred embodiment of the invention;
Figs. 4a, 4b are enlarged views of details 4a and 4b, respectively, of Fig. 4;
Fig. 5 schematically shows a rotary vacuum pump having a rotating shaft mounted therein and supported by rolling bearings and associated bearing supports according to another preferred embodiment of the invention;
Figs. 5a, 5b are enlarged views of details 5a and 5b, respectively, of Fig. 5;
Fig. 6 schematically shows a rotary vacuum pump having a rotating shaft mounted therein and supported by rolling bearings and associated bearing supports according to still another preferred embodiment of the invention; and
Figs. 6a, 6b are enlarged views of details 6a and 6b, respectively, of Fig. 6.

### Detailed description of preferred embodiments

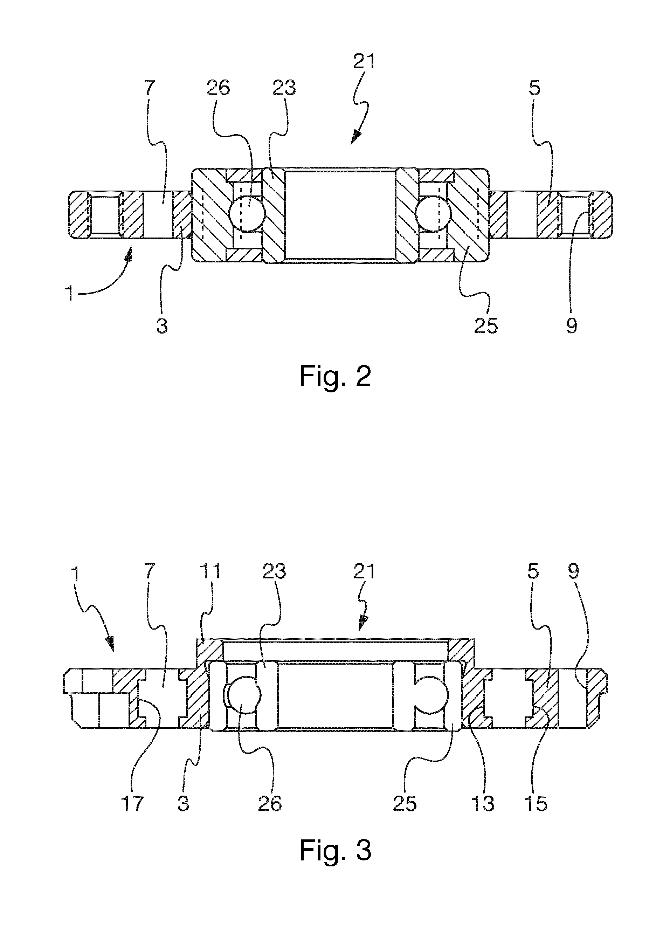

With reference to Fig. 2 a rolling bearing 21 and an associated bearing support 1 according to a preferred embodiment of the invention are shown.

According to the conventional technique, the rolling bearing 21 includes an inner ring 23 and an outer ring 25 in which respective tracks for rolling elements - namely balls 26 in the shown embodiment - are provided.

Thanks to the balls 26, the rolling bearing 21 can accommodate the relative movement between a rotating member integral with the inner ring 23 and a stationary member integral with the outer ring 25, or vice versa, or even between two rotating members moving at different speeds and integral with the inner and outer ring respectively.

According to the invention, the support for rolling bearings 1 comprises:
- a first inner annular shell 3 made of metal and intended to be mounted on the outer surface of the outer ring 25 of the rolling bearing 21;
- a second outer annular shell 5 made of metal, concentric with said first inner annular shell and external thereto and intended to be mounted on the surface of the seat receiving the rolling bearing 21;
- an intermediate member 7 made of rubber and provided between said first inner shell 3 and said second outer shell 5 and fixed thereto, preferably by directly molding said intermediate member between said shells.

In order to avoid any sliding movement between the rolling bearing 21 and its support 1, in the disclosed example, the inner diameter of the inner shell 3 is selected so that said inner shell 3 can be fitted with interference on the outer ring 25 of the rolling bearing 21.

As a result, the friction between the outer surface of the outer ring 25 of the rolling bearing 21 and the inner surface of the inner shell 3 of the support 1 guarantees the correct axial alignment between the bearing and its support.

It will be evident that any other traditional technique allowing to avoid undesired movements of the support 1 with respect to the rolling bearing 21 - such as gluing, welding and the like - could also be used.

As an alternative, the inner shell of the support 1 can be machined as a single piece with the outer ring 25 of the rolling bearing 21.

In order to avoid any sliding movement between the bearing support 1 and the seat of the rolling bearing, in the disclosed example the outer shell 5 of the support 1 is provided with a plurality of axial through-holes 9 for the passage of screws so as to fasten said outer shell to said seat by screwing.

Also with respect to the outer shell of the support, it will be evident that any other traditional technique allowing to avoid undesired movements of the bearing support 1 with respect to the rolling bearing seat - such as gluing, welding and the like - could also be used.

As an alternative, the outer shell of the support 1 can be machined as a single piece with the rolling bearing seat.

As mentioned above, thanks to the configuration of the support for rolling bearings 1 according to the invention the inner and outer shells 3, 5 of the support are separate elements connected to each other by the intermediate elastomeric member 7 only, whereby they are free to move with respect to each other. On the contrary, any movement of the intermediate member 7 relative to said shells is prevented.

Therefore, the stiffness of the support for rolling bearings 1 according to the invention only depends on the mechanical properties of the intermediate elastomeric member - namely on its Young modulus or tensile modulus - and on the geometry thereof, which allows to obtain a more uniform and predictable performance in terms of vibration damping as well as a more predictable dynamic behavior for the bearing associated to such support.

Turning now to Fig. 3, another preferred embodiment of the support for rolling bearings 1 is shown.

According to said further preferred embodiment, the inner shell 3 of the support 1 has, on its inner side, an inwardly protruding rim 11 that partially extends over the outer ring 25 of the rolling bearing 21.

Therefore, according to this embodiment the correct axial alignment between the bearing and its support is guaranteed both by the friction between the outer surface of the outer ring 25 of the rolling bearing 21 and the inner surface of the inner shell 3 of the support 1 and by the contact surface between the outer ring 25 of the rolling bearing 21 and the protruding rim 11 of the inner shell 3 of the support 1.

Always with reference to Figure 3, in this embodiment an annular groove 13 is provided in the middle portion in the axial direction of the outer surface of the inner shell 3 of the support 1 and a corresponding annular grove 15 is provided in the middle portion in the axial direction of the inner surface of the outer shell 5 of the support 1. Correspondingly, the elastomeric intermediate member 7 has an enlarged portion 17 at the middle portion thereof in the axial direction, said enlarged portion 17 fitting into the respective grooves 13, 15 of the inner and outer shell 3, 5 of the support 1.

Thanks to this arrangement the molding of said intermediate member 7 between said shells 3, 5 is easier and the coupling of said intermediate member to said shell is enhanced, whereby any movement of said intermediate member relative to either shell is further prevented.

From the above description it will be evident that any elastomeric material allowing shells 3,5 to move with respect to each other while preventing any movement of the intermediate member 7 relative to said shells can be used for manufacturing said intermediate member 7.

Advantageously, if an elastomeric material with a high coefficient of thermal conductivity is used, the elastomeric intermediate element 7 also contributes for a better cooling of the rolling bearing and of the rotating member associated thereto.

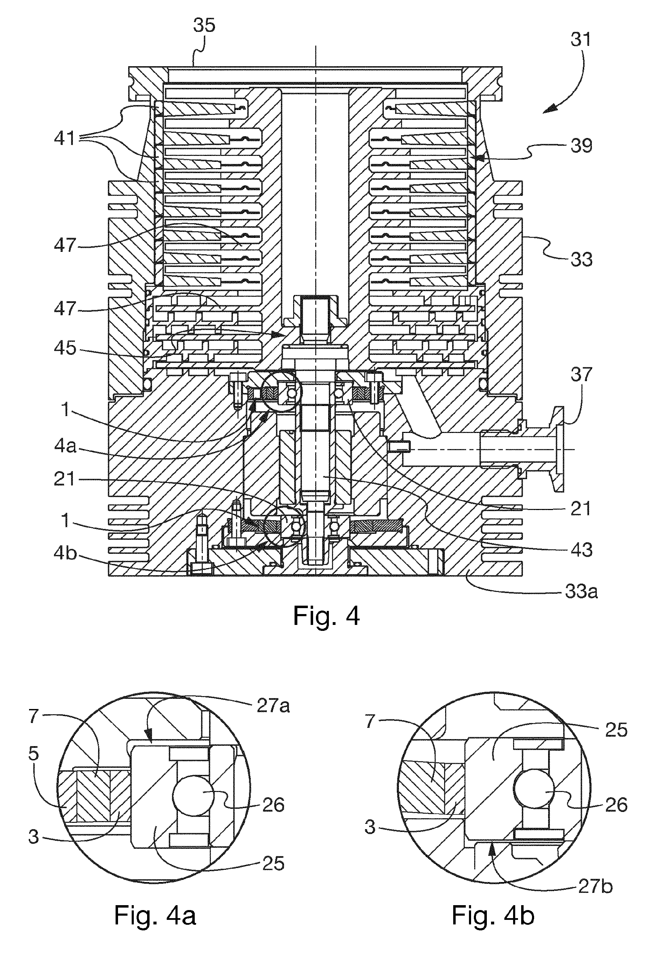

Turning now to Fig. 4, the present invention also relates to a rotary vacuum pump 31, for instance a turbomolecular pump, comprising:
- a pump housing 33 having a pump inlet port 35 and a pump outlet port 37 and comprising a pump basement 33a;
- a stator 39 integral with said pump housing and provided with one or more stator discs 41;
- a rotating shaft 43 mounted inside said pump housing;
- a rotor 45 mounted on said rotating shaft 43 and provided with one or more rotor discs 47, said rotor discs cooperating with said stator discs for pumping a gas from the pump inlet port to the pump outlet port;
- one or more rolling bearings, such as the rolling bearings 21 shown in Fig. 1 or in Fig. 2, supporting the rotating shaft 43, and more particularly two rolling bearings 21, namely an upper rolling bearing and a lower rolling bearing;
- a bearing support such as the support 1 shown in Fig. 1 or in Fig. 2 associated to each rolling bearing 21.

The provision of the supports 1 for supporting the rolling bearings 21 of the rotating shaft 43 allows to effectively damp the vibrations coming from said rotating shaft and to remarkably reduce the pump noise.

Furthermore, as the radial and axial stiffness of the supports 1 only depends on the mechanical properties and on the geometry of the intermediate elastomeric member thereof, their behavior is more predictable and correspondingly the dynamic behavior of the rotating shaft 43 and of the pump rotor 45 associated thereto is more predictable with respect to prior art pumps.

In this respect, it is to be noted that the bearing support associated to the upper rolling bearing and the bearing support associated to the lower rolling bearing shown in Fig. 4 (and more particularly their intermediate elastomeric elements) have remarkably different geometries, so as to provide for different performances, specific for the position of each rolling bearing.

As better shown in Figs. 4a and 4b, in this embodiment the basement of the pump housing is shaped so as to leave an axial gap 27a, 27b, respectively, between each rolling bearing 21 and the associated support 1 and the pump housing itself.

Thanks to the absence of any contact surface in the axial direction between the rolling bearings and their supports and the pump housing, an optimum damping of vibrations can be obtained.

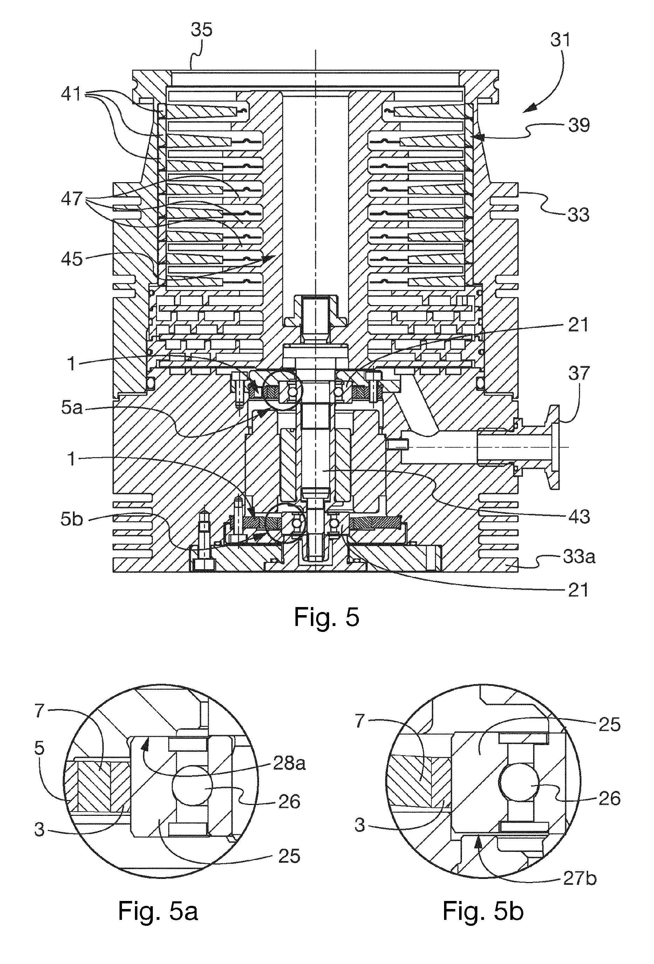

Fig. 5 shows an alternative embodiment of the rotary vacuum pump 31 according to the invention.

As better shown in Figs. 5a and 5b, in this embodiment an axial gap 27b is provided between the lower rolling bearing 21 and its associated support 1 and the pump housing. On the contrary, the upper rolling bearing 21, namely the outer ring 25 of said rolling bearing, directly abuts against the pump housing surface, thus forming a contact surface 28a.

As an alternative, the bearing support 1 of said rolling bearing 21, namely the inner shell 3 of said support, could directly abut against the pump housing surface.

Thanks to said contact surface 28a the axial position of the rotating shaft 43 supported by the rolling bearings 21 and of the pump rotor 45 associated thereto can be easily controlled via the supports 1 according to the invention.

With this arrangement, the efficiency in damping vibrations is slightly reduced with respect to the arrangement shown in Fig. 4, so that the present arrangement can be advantageously used when the requirements on vibration damping are less severe.

Although the contact surface 28a is preferably formed between the upper rolling bearing and/or its support and the pump housing surface (as shown in Figure 5a), it is possible and conceivable that the lower rolling bearing and / or its support directly abuts against the pump housing surface

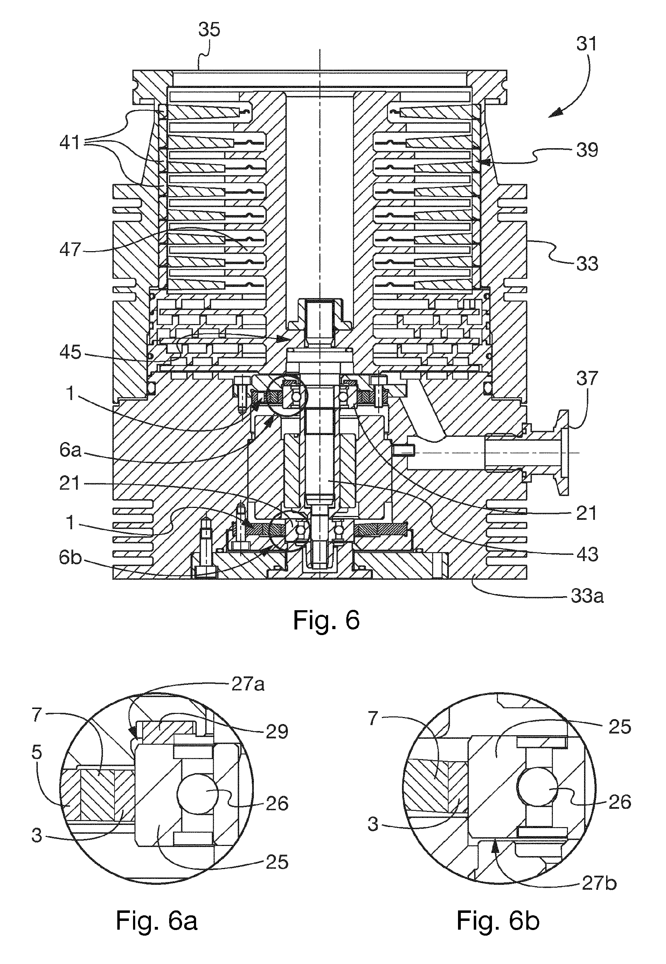

Fig. 6 shows a further alternative embodiment of the rotary vacuum pump 31 according to the invention.

As better shown in Figs. 6a and 6b, in this embodiment the basement of the pump housing is shaped so as to leave an axial gap 27a, 27b, respectively, between each rolling bearing 21 and the associated support 1 and the pump housing itself; however an annular resilient element 29 is fitted in the gap 27a between the upper rolling bearing 21 (or the support 1 associated thereto) and the pump housing, so that this upper rolling bearing 21 (or the support 1 associated thereto) contacts the pump housing surface via the annular resilient element 29.

The provision of a contact, even indirectly through the resilient element 29, between the surface of the rolling bearing 21 and/or of the support 1 associated thereto with the pump housing allows to control the axial position of the rotating shaft 43 and of the pump rotor 45 associated thereto.

On the other hand, the elastomeric annular element 29 acts as an axial spring, thus effectively damping axial vibrations.

As a result, the arrangement according to this embodiment shows intermediate performances, both in terms of vibration damping and axial position control, between the arrangement shown in Fig. 4 and the one shown in Fig. 5 and could represent a satisfactory compromise in many different applications.

Although the resilient member 29 is preferably provided at the upper rolling bearing and/or its support (as shown in Figure 6a), it is possible and conceivable such resilient member is provide at the lower rolling bearing and / or its support.

From the foregoing description, it is evident that the support for rolling bearings according to the invention attains the intended aims, since it allows to obtain a more predictable behavior, exclusively depending on its mechanical properties and geometry and independent from the friction force acting between the support itself and the rolling bearing associated thereto.

It is also evident that such a support for rolling bearings advantageously finds application, among others, in the technical field of rotary vacuum pump, where accuracy and efficiency in vibration damping and position control are strongly required.

It is evident as well that the above description has been given only by way of non-limiting example and that several modifications are possible without departing from the scope of the invention, as defined by the appended claims.

## Claims

1. A support for rolling bearing (1) **characterized in that** it comprises:
- a first inner annular shell (3) made of metal;
- a second outer annular shell (5) made of metal, concentric with said first inner annular shell and external thereto; and
- an elastomeric intermediate member (7) provided between said first inner shell (3) and said second outer shell (5) and fastened thereto.

2. A support for rolling bearing (1) according to claim 1, wherein said intermediate elastomeric member (7) is directly molded between said first inner shell (3) and said second outer shell (5).

3. A support for rolling bearing (1) according to claim 1, wherein said intermediate elastomeric member (7) is made of an elastomeric material having a high coefficient of thermal conductivity.

4. A support for rolling bearing (1) according to claim 1, wherein said first inner shell (3) of said support (1) has, on its inner side, an inwardly protruding rim (11).

5. A support for rolling bearing (1) according to claim 1, wherein an annular groove (13) is provided in the middle portion in the axial direction of the outer surface of said first inner shell (3) of said support (1), a corresponding annular grove (15) is provided in the middle portion in the axial direction of the inner surface of said second outer shell (5) of said support (1) and said intermediate elastomeric member (7) has an enlarged portion (17) at the middle portion thereof in the axial direction, said enlarged portion (17) fitting into said respective grooves (13, 15) of said shells (3, 5).

6. A rolling bearing (21) comprising an inner ring (23) and an outer ring (25) in which respective tracks for rolling elements (26) are provided, **characterized in that** it is provided with a support (1) as claimed in any one of the claims 1 to 5.

7. A rolling bearing (21) according to claim 6, wherein said first inner shell (3) of said support (1) is fitted with interference on said outer ring (25) of said rolling bearing (21).

8. A rolling bearing (21) according to claim 6, wherein said first inner shell (3) of said support (1) is made integral with said outer ring (25) of said rolling bearing (21), by gluing, welding or similar technique or it is machined as a single piece with said outer ring (25).

9. A rolling bearing (21) according to claim 6, wherein said second outer shell (5) of said support (1) is made integral with said seat receiving said rolling bearing (21), by screwing, gluing, welding or similar technique or it is machined as a single piece with said seat.

10. A rolling bearing (21) according to claim 6, wherein said first inner shell (3) of said support (1) has, on its inner side, an inwardly protruding rim (11) that partially extends over said outer ring (25) of said rolling bearing (21).

11. A rotary vacuum pump (31) comprising:
- a pump housing (33) having a pump inlet port (35) and a pump outlet port (37) and comprising a pump basement (33a);
- a stator (39) integral with said pump housing and provided with one or more stator discs (41);
- a rotating shaft (43) mounted inside said pump housing;
- a rotor (45) mounted on said rotating shaft (43) and provided with one or more rotor discs (47), said rotor discs cooperating with said stator discs for pumping a gas from the said pump inlet port to said pump outlet port;
- one or more rolling bearings (21) supporting said rotating shaft (43);
**characterized in that** at least one of said one or more rolling bearings (21) is provided with a support (1) according to any of the claims 1 to 5.

12. A rotary vacuum pump (31) according to claim 11, wherein an axial gap (27a, 27b) is left between each of said rolling bearings (21) and associated supports (1) and the wall of said pump housing (33).

13. A rotary vacuum pump (31) according to claim 12, wherein an annular resilient member (29) is fitted in the axial gap (27a, 27b) between at least one rolling bearing (21) and associated support (1) and the wall of said pump housing (33).

14. A rotary vacuum pump (31) according to claim 11, wherein at least one of said one or more rolling bearings (21) and/or the support (1) associated thereto directly abuts against the wall of said pump housing (33).

15. A rotary vacuum pump (31) according to any of the claims 11 to 14, wherein said rotary vacuum pump is a turbomolecular pump.
